# EUROPÄISCHE PATENTSCHRIFT

(11) **EP 0 653 174 B1**
(45) Veröffentlichungstag und Bekanntmachung des Hinweises auf die Patenterteilung: **09.12.1998**
(21) Anmeldenummer: 94117486.4
(22) Anmeldetag: 05.11.1994
(51) Int. Cl.: A47C 23/06, A47C 23/00, A47C 31/12

(54) **Polsterelement mit einer Vielzahl von in regelmässigen Mustern angeordneten Federelementen**
Upholstery element having a plurality of spring elements placed in regular patterns
Elément de rembourrage avec plusieurs éléments de ressort disposés dans des configurations régulières

(30) Priorität: 10.11.1993 DE 9317114 U; 10.03.1994 DE 9404021 U; 30.07.1994 DE 9412330 U
(43) Veröffentlichungstag der Anmeldung: 17.05.1995
(73) Patentinhaber: SENNE Lizenz + Produkte GmbH, D-33758 Schloss Holte-Stukenbrock (DE)
(72) Erfinder: Fromme, Heinrich, D-33758 Schloss Holte-Stukenbrock (DE)
(74) Vertreter: Strauss, Hans-Jochen, Dipl.-Phys., Dr.

(56) Entgegenhaltungen:
- EP-A- 0 401 712

## Beschreibung

Die Erfindung betrifft ein Polsterelement insbesondere für Sitz- oder Liegeflächen nach dem Oberbegriff des unabhängigen Anspruchs 1.

Zur Polsterung werden oft Stahlfedern eingesetzt, die, in regelmäßigen Mustern als Federkern zwischen den Polsterlagen angeordnet, die beim Sitzen bzw. Liegen auftretenden Kräfte aufnehmen und ein Anpassen der Unterlage an die Körperform ermöglichen, wobei die gepolsterte Unterlage so verformt wird, daß sie sich an die Körperform entsprechend der durch die Lage gegebenen Kraftverteilung anpaßt. Es ist weiter bekannt, die in sich mehr oder weniger elastische Unterlage auf Latten zu lagern, die ihrerseits in beidseits angeordneten, nachgebenden Halterungen gelagert sind, und die entweder als starre Massiv-Latten oder als nachgebende Schichtholzlatten ausgebildet sind. Dadurch wird die gewünschte und erforderliche Nachgiebigkeit und Anpassungsfähigkeit gewährleistet. Da die Stahlfedern in den so gestützten Polstereinheiten im Laufe der Zeit Geräusche abgeben, und da die Stahlfedern brechen können, wobei dann die frei gewordenen Enden mit ihren Spitzen durch die Abdeckungen dringen können und so ein ruhiges Liegen stören, wurde bereits versucht, die Stahlfedern einzeln in Stoffhüllen einzunähen. Jedoch werden die Metalle der Federn durch die unvermeidbare Feuchtigkeit angegriffen, ein Umstand der über Korrosionen zum Federbruch führen kann.

Bei Lattenrosten als Unterlagen kann durch Verwendung elastischer Puffer als Halteelemente zum beidseitigen Stützen der Starr- oder Federlatten (EU-A-0 031 132) die Korrosionsgefahr ausgeschlossen und eine Geräuschentwicklung weitgehend unterdrückt werden, auch kann durch besondere Ausbildung der Querlatten die zu einer bestimmten Verformung jeder Latte notwendige Kraft eingestellt werden, jedoch lassen sich über die Breite der Latte hinweg keine Abstufungen erreichen, zumal auch hier eine Beeinflussung durch vorhandene Feuchtigkeit nicht auszuschließen ist. Um auch eine Abstufung der abzufangenden Kraft über die Breite der Latte hinweg zu erreichen, wurde bereits vorgeschlagen (EP-A- 0 401 712), die gesamte Fläche der Unterlage mit elastischen Elementen zu belegen, die zur Vermeidung von Überlastungen und zur Begrenzung des verfügbaren Federweges in U-Profilen gelagert sind. Bei dieser Flächenlagerung für Liege-oder Sitzmöbel, etwa für Betten o. dgl. ist die Auflagefläche für eine Polsterauflage wie eine Matratze -wie aus DE 36 12 603 A1 bereits bekannt- in Teilflächen aufgelöst, die in regelmäßigem Muster angeordnet sind, und von denen jedes einzelne dieser Federelemente federnd ausgebildet ist. Dabei werden die Federelemente auf trogförmige Traglatten mit U-förmigem Querschnitt aufgebracht, die parallel zu den Längsholmen des Rahmens verlaufen. Diese weisen entsprechende Halterungen auf, so daß die Federelemente in ihrer Position fixiert werden können. Das freie Ende dieser Federelemente, der Kopf, ist mit einem Auflageteller versehen, der an diesem Kopf festgelegt und so mit diesem verbunden ist, wobei bei Belastung der Weg des Auflagetellers durch die hochstehenden Flansche der U-Profile zur Schonung der Federelemente begrenzt ist. Durch diese Wegbegrenzung wird verhindert, daß sich die Liegefläche der Form des liegenden Körpers eines Menschen anpaßt. Sowohl das Aufbringen der Federelemente auf den Traglatten als auch das Versehen der Federelemente mit den Auflagetellern sind dabei aufwendige Arbeitsgänge, die manuell durchzuführen sind, und deren Kosten die Herstellung einer derartigen Unterlage wirtschaftlich belasten.

Daraus ergibt sich die der Erfindung zugrunde liegende Aufgabe, nach der ein gattungsgemäßes Polsterelement mit Federung als Unterlage auch für nur wenig elastische matratzenähnliche Auflagen so weitergebildet werden soll, daß das Polsterelement in einfacher Weise aus einfach und reproduzierbar herstellbaren Federelemente mit unterschiedlichen, auch progressiven Federkennlinien, durch die bei den zu erwartenden Lasten auch der Federweg begrenzt ist, so zusammengestellt werden kann, daß bei einfachem Aufbau eine Anpaßbarkeit an unterschiedliche Gegebenheiten möglich ist, wobei äußere Einflüsse, wie Feuchte u. dgl. ausgeschaltet sein sollen, wobei in Weiterführung der Aufgabenstellung insbesondere auch die Federkennlinie veränderbar sein soll.

Diese Aufgabe wird nach der Erfindung gelöst durch die im Hauptanspruch wiedergegebenen Merkmale; vorteilhafte Weiterbildungen und bevorzugte Ausführungsformen beschreiben die Unteransprüche.

Zur Lösung weisen die Federelemente als zwischen Fuß und Kopf vorgesehene, einem Hohlprofilabschnitt mit einer in einer zur Auflageplatte parallelen Ebene liegenden, rechtwinklig zur Richtung der das Federelement belastenden Kraft ausgerichteten Achse entsprechenden Hohlkörper als Federkörper auf, wobei die als Kunststoffteile ausgebildeten Federelemente in Reihen und Spalten auf der Unterlage festgelegt sind. Durch diese Ausbildung wird erreicht, daß eine Nachgiebigkeit erreicht ist, die von der Auflösung der gepolsterten Sitz-/ Liegefläche in Einzelflächen gegeben ist, wobei diese Einzelflächen durch die Größe der Auflageteller gegeben sind. Die auf der Unterlage befestigten Federelemente überdecken dabei die Auflagefläche für die Matratze o.dgl. nahezu vollflächig, wobei diese in Spalten und Reihen angeordnet sind. Diese Federelemente werden dabei auf einer Unterlage befestigt, wobei als Unterlage eine sich über die gesamte Liegefläche erstreckende Platte vorgesehen sein kann. Wegen der Federwirkung der einzelnen Federelemente kommt es auf eine Nachgiebigkeit der Platte nicht an; es kann daher auch eine starre Platte eingesetzt werden.

Da die Federelemente in Reihen angeordnet sind, ist für jede Reihe eine in einem Rahmen angeordnete Latte vorgesehen , auf denen die Fußplatten der Federelemente in vorzugsweise gleichen Abständen voneinander befestigt sind. Durch den Rahmen wird ein Polstereinsatz gewonnen, der gut händhabbar ist. Die Anzahl der Latten ist dabei von Rahmengröße und von dem vom Auflageteller vorgegebenen Lattenabstand bestimmt. Die Latten werden vorteilhaft an den Längsholmen des Rahmens o.dgl. mittels Latten-Aufhänger befestigt, die mit auf die Enden der Latten aufgesteckten Lattenköpfen zusammenwirken, wobei die Latten-Aufhänger und/oder die Lattenkopf-Aufsätze als vorzugsweise gespritzte Kunststoffteile ausgebildet sind. Durch diese Ausbildung wird ein Polsterelement geschaffen, bei dem die Unterlage von Latten gebildet ist, auf denen die Federelemente in Spalten derart angeordnet sind, daß sie die Reihen der Polsterung bilden; dabei können die Latten wegen der Federwirkung der Federelemente auch als Starrlatten ausgebildet sein.

Mit dieser Ausbildung wird ein Polsterelement erreicht, das nicht korrosionsanfällig ist und bei dem die Geräuschentwicklung unterdrückt wird. Die einzelnen Federelemente sind dabei in einem regelmäßigen Muster über die zu polsternde Fläche verteilt, so daß der beim Sitzen oder beim Liegen übertragene Druck verteilt auf eine Mehrzahl von Federelementen übertragen wird, so daß sich die unter Wirkung der Kraft einstellende Form des Polsterelementes der Form des diese Kraft ausübenden Gegenstandes, beispielsweise ein sitzender oder liegender menschlicher Körper, gut anpassen kann. Dabei weisen die Federelemente je eine Fußplatte zum Aufsetzen auf die Unterlage und einen Auflageteller zum Auflegen einer matratzenähnlichen Auflage auf, die, wiederum wegen der Federwirkung der Federelemente, keiner eigenen Federwirkung bedarf, es genügt beispielsweise eine einfache Schaumauflage.

Vorteilhaft wird dabei der Rahmen von mindestens zwei Rahmenteilen gebildet, wobei aneinander grenzende Rahmenteile mit die jeweiligen Teile der Längsholme ausladend verbindenden Gelenken schwenkbar aneinander angelenkt sind, deren Ausladung der Höhe der Federelemente entspricht. So wird ein Rahmen erreicht, dessen Kopf- und/oder Fußteil gegenüber dem Mittelteil ausfgeschwenkt werden können, wobei es sich von selbst versteht, daß zwischen dem den Beckenbereich des Körpers aufnehmenden Mittelteil und dem Kopfteil ein weiteres ausschwenkbares Brustteil und/oder daß das Fußteil ein dem Oberschenkelbereich und ein dem Unterschenkelbereich zugeordnetes Teil aufweist, die gegeneinander so verschwenkbar sind, daß ein gegenseitiges Behindern bei der Bewegung der Auflageteller beim Verschwenken ausgeschlossen ist.

Um eine Auflage aufzunehmen, sind dabei die Längs- und Querabmessungen der Auflageteller der Federelemente, höchstens gleich dem Längsabstand der Reihen und dem Querabstand der Federelemente innerhalb der Reihe. Damit wird eine Überdeckung der abzupolsternden Fläche geschaffen, auf die eine Auflage aufgelegt wird. Dabei müssen die Abstände zwischen den benachbarten Auflageteller so sein, daß beim Kippen der Auflageteller bei einseitig wirkender Kraft benachbarte Auflageteller nicht untereinander fassen und sich durch Verklemmen so festsetzen können, daß die Federwirkung aufgehoben ist. Um eine hinreichende Unterlüftung der Auflage zu erreichen, wird der Auflageteller vorteilhaft mit einer Anzahl von Öffnungen im Bereich der Auflagefläche für eine matratzenähnliche Auflage versehen.

Jedes der das Polsterelement bildenden Federelemente weist dabei einen Fuß auf, der mit Mittel zur Befestigung auf der Unterlage bzw. der Latte versehen ist. Zur Befestigung der Federelemente an den Latten weist der Fuß der Federkörper als Befestigungsmittel eine Lattenkammer mit im wesentlichen rechteckigem Querschnitt auf, so daß jedes der Federelemente auf die Latten aufgeschoben werden kann, wobei vorzugsweise im Inneren der Lattenkammer auf der dem Federkörper zugewandten Wand eine mit der Latte zusammenwirkende Fixierungsnoppe vorgesehen ist. Damit wird die Möglichkeit geschaffen, die einzelnen Latten mit Federelementen vorzubestücken und die gesetzten Federelemente in ihrer Position zu fixieren, wobei es sich von selbst versteht, daß die Latten in der gewünschten Position mit einer die Fixierungsnoppen aufnehmenden Bohrung versehen sind, in die diese Noppen bei Erreichen der richtigen Position einschnappen. Für die Montage lassen sich dann die Federelemente auf die Traglatte aufstecken, wobei ein dünner Blechstreifen als Montagehilfe auf die Traglatte aufgelegt ist, der verhindert, daß die auf die Traglatte aufgeschobenen Federelemente vor Erreichen ihrer endgültigen Position einrasten und so nicht (oder nur mit Schwierigkeiten) über diese ihnen nicht zugeordneten Raststellen hinaus bewegt werden können.

In einer bevorzugten Ausführungsform ist das Federelemente mit Fuß und Kopf einstückig hergestellt; dabei werden Federkörper mit Kopf und Fuß in einem Arbeitsgang hergestellt, was eine wirtschaftliche Herstellung ermöglicht. In einer anderen, ebenfalls bevorzugten Ausführungform ist das Federelement mehrteilig ausgebildet, wobei zumindest der Kopf des Federkörpers mit Klemmaufnahmen an dem Federkörper festlegbar ist, und wobei zumindest der Federkörper aus Kunststoff hergestellt ist. Dabei kommt es wesentlich auf den Federkörper selbst an, wobei die Mittel des Fußes zur Befestigung oder zur Befestigung des Auflagetellers durchaus aus einem anderen Material, etwa auf Blech geformt sein können. Zum Herstellen können im Grundsatz alle Verfahren zur Kunststoffverarbeitung eingesetzt werden; vorteilhaft sind dabei das einstückige Herstellen im Vulkanisierverfahren aus Kautschuk, im Formschäumverfahren, insbesondere aus Polyurethan, im Extrusionsverfahren aus extrudierbarem Kunststoff, wobei das Federelement bzw. der Federkörper vom extrudierten Strang abgelängt wird.

Zum Aufsetzen des Auflagetellers muß der Kopf des Federkörpers so eingerichtet sein, daß zum einen der Auflageteller sicher gehalten und zum anderen eine gute Krafteinleitung sicher gestellt ist. Dabei ist es im Sinne einer wirtschaftlichen Herstellung notwendig, daß der Federkörper einen homogenen Körper aus dem gewählten Elastomer bildet. Unter diesen Umständen ist es vorteilhaft, wenn eine zweihälftig ausgebildete Kopfklammer eingesetzt wird, mit einer Tragplatte und einer Verschlußlasche, die durch ein Gelenk, das vorteilhaft in Form eines Folienscharniers gestaltet ist, verbunden sind, und die beide auf der dem Folienscharnier gegenüberliegenden Seite zusammenwirkende Rastmittel aufweisen, wobei die Tragplatte in eine Aufahme unter die Auflageteller eingesetzt und die Verschlußlasche den Kopf des Federkörpers untergreifend mit der Tragplatte verrastet ist, wodurch Federkörper und Auflageteller mit einfachen Mitteln wirtschaflich verbunden sind. Diese Kopfklammer ist dabei aus einem biegesteifen Kunststoff im Spritzgußverfahren herstellbar.

Vorteilhaft ist dabei die Aufnahme für die Tragplatte als einander gegenüberliegend angeordnete Winkelleisten so unter der Auflageplatte angeformt, daß diese von den Winkelleisten getragen wird. Zur Sicherung der Position sind Endanschläge vorgesehen, die das Einschieben des Auflagetellers in die Aufnahme begrenzen. Vorteilhaft ist weiter, wenn unter dem Auflageteller Ausnehmungen für die mit dem Auflageteller zusammenwirkenden Rastelemente so vorgesehen sind, daß der in endgültiger Position eingesetzte Auflageteller nicht mehr zurückgezogen werden kann. Da hier der Auflageteller über diese Raststelle hinweg geschoben werden muß, empfiehlt es sich, diese mit einer Aufgleitrampe zu versehen, um das Aufschieben zu erleichtern.

Alternativ sind die Mittel des Auflagetellers als Einschiebewinkel mit Sperraste und Endanschlag ausgebildet, so daß die Tragplatte in Bezug auf den Einschiebeweg begrenzt ist und in Endposition einrastet. Vorteilhaft weist dazu der Auflageteller beidseite der Mittelachse, Schiebewinkel, Endanschlag und Rastmittel zum Befestigen der Tragplatte auf. In einer Weiterbildung weist der Kopf des Federkörpers eine Verstärkung auf, die von der Verschlußplatte untergriffen ist; dabei ist es vorteilhaft, wenn die Verstärkung eine zum Inneren des Federkörpers geöffnete Führungsnut aufweist, in die sich die Verschlußplatte der Klammer einlegt.

Auch der Fuß kann bei der mehrteiligen Herstellung als gesondertes Teil vorgesehen werden; dabei ist diese ebenfalls mit Mitteln versehen, die das Festlegen auf der Platte bzw. der Latte erlauben. Diese Mittel entsprechen denen, mit denen der Auflageteller am Kopf des Federelementes festgelegt wird. Insbesondere wird der Fuß so ausgebildet, daß er in eine Einschiebenut oder in eine von Einschiebewinkeln gebildete Führungsbahn eingeführt werden kann, in die der Fuß formschlüssig einsetzbar ist. Bei den mehrteiligen Ausführungsformen werden Federkörper sowie dessen Kopf und dessen Fuß unabhängig voneinander hergestellt, wodurch eine größere Freiheit von der Materialwahl erreicht wird. Auch können Federkörper mit unterschiedlichen Federcharakteristiken bereit gehalten und mit den Köpfen und Füßen kombiniert werden, was eine Abstufung der Polsterhärte auch innerhalb eines Polsterelementes erlaubt.

Der Federkörper des Federelementes kann dabei in unterschiedlicher Weise ausgebildet sein. Vorteilhaft ist, den Federkörper so zu gestalten, daß die Querschnittsform des Federkörpers die eines Ovals oder eines Ellipsiods ist, das etwa bei seiner kleinen Mittelachse abgeschnitten und dessen Spitze abgeflacht ist, wobei das Fußteil im Bereich des Schnittes im Bereich der kleinen Achse vorgesehen ist, während die abgeflachte Spitze das den Tragteller aufnehmende Kopfteil bildet. Durch die Abwandlung der Querschnitts-Formen lassen sich die Federeigenschaften den Anforderungen anpassen, wobei der Federkörper aus einem Elastomer, vorteilhaft aus einem geschlossen- zelligem Elastomerschaum hergestellt ist. Diese Profile sind offene Hohlkammerprofile mit einer Kammer. Offene Profile dieser Art lassen sich im Strangpreßverfahren ebenso herstellen wie im Spritzgußverfahren, wobei beide Herstellungsverfahren eine sehr wirtschaftliche Herstellung des Federköpers aus dem Elastomer erlauben. Daß der Elastomer auch aufgeschäumt sein kann, erscheint dabei selbstverständlich.

Zur Veränderung der Federeigenschaft weisen die seitlichen Wände des in seiner Grundform ellipsoiden Federkörpers zwischen Kopf- und Fußteil einen Einzug auf, so daß sein Querschnitt die Form einer in der Mitte offenen "Acht" annimmt. Der Grad dieses Einzuges erlaubt, in Verbindung mit dem Material und seinen elastischen Konstanten die gewünschte Federungskennlinie einzustellen. Dabei kann der mittige Einzug auch als stegartige Verbindung ausgebildet sein, wodurch der Federkörper die Querschnittsform einer echten "Acht" erhält. Bei dieser Ausbildung entsteht ein Zweikammer-Hohlprofil.

Weiter ist es bei dieser Ausbildung vorteilhaft, wenn Seitenverbinder vorgesehen sind, die beidseits die beiden ausladenden Bögen der "Acht" des Federkörpers miteinander verbinden, wobei diese sich zumindest über einen Teil der Länge der "Acht" des Federkörpers erstrecken. Diese Seitenverbinder überbrücken den Einzug, der sich mittig befinden kann; dabei ist die Breite der Seitenverbinder so, daß sie sich zumindest über einen Teil der Breite des Federkörpers erstrecken, wobei die Anordnung der Seitenverbinder vorteilhaft symmetrisch zur Mittelebene des Federkörpers erfolgt. Bei dieser Ausführungsform weist somit das Hohlkammerprofil vier Kammern auf, von denen etwa die seitlichen, auch mit Einsätzen aus elastischen Materialien versehen, die Einstellung der Federcharakteristik auf gewünschte Werte erlaubt.

Um die Federcharakteristik des Federkörpers den Erfordernissen anpassen zu können, wird weiter vorgeschlagen, daß der Federkörper mindestens einen inneren Verstärkungssteg aufweist, wobei vorzugsweise der/die Verstärkungsstege symmetrisch zur Ebene der belastenden Kraft verlaufen. Dabei ist es möglich, daß der Verstärkungssteg die Mittelebene durchquert. Alternativ ist möglich, daß der Verstärkungssteg beidseits der Mittelebene von den einander gegenüberliegenden Seiten des Federkörpers zu dessen Fuß geführt ist. Vorteilhaft ist dabei, wenn der Steg einsetzbar ist, wobei der Federkörper an den Stellen, an denen der/die Verstärkungsstege ansetzen, eine Kammer aufweist, in die die hammerartig ausgebildeten Enden des/der Verstärkungsstege eingesetzt werden, wobei es sich von selbst versteht, daß diese Kammern von äußeren Verstärkungen gebildet sind.

Der Auflageteller selbst ist vorteilhaft eine verrippt ausgebildete Platte vorzugsweise aus Kunststoff, die ebenfalls im Spritzgußverfahren herstellbar ist. Je nach gewünschter Nachgiebigkeit können die Rippen dabei parallel zu den Seitenkanten des Auflagetellers verlaufen oder "über Eck" geführt sein, so daß im ersten Fall die jeweiligen diagonalen Bereiche durchgehend sind, während dies im zweiten Fall für die jeweiligen Mittenbereiche gilt. Dabei wird die Steifigkeit des Auflagetellers von den durchgehenden Bereichen, die Nachgiebigkeit von den gerippten Bereichen bestimmt, so daß bei der ersten Ausführung ein insgesamt steiferer Auflageteller gegeben ist, und daß die zweite Ausführung einen Auflageteller ergibt, dessen Eckbereiche einer Belastung nachgeben. Durch diese Rippen wird - ebenso wie durch eine Anzahl von Öffnungen in einem nicht verrippten Auflagteteller - erreicht, daß eine hinreichende Unterlüftung der Auflage gegeben ist. Eine hinreichende Unterlüftung wird bei nicht verrippten Auflagetellern auch dadurch erreicht, daß der Auflageteller Rinnen aufweist, die ähnlich Belüftungskanälen Luft unter die Auflage gelangen lassen und so den gewünschten Effekt bewirken.

Das Wesen der Erfindung wird an Hand der in den Figuren 1 bis 12 dargestellten Ausführungsbeispiele näher erläutert; dabei zeigen:
- Fig. 01:: Polsterelement, schematisch, Aufsicht;
- Fig. 02:: Mehrteiliges, verstellbares Polsterelement, schematische Seitansicht
- Fig. 03:: Federelement auf angedeuteter Latte, geschnitten;
- Fig. 04:: Federelement mit ellipsoider Grundform mit eingezogenen Seitenteilen, innerem Verstärkungssteg und äußeren Seitenverbindern, perspektivisches Schema;
- Fig. 05:: Federelement nach Figur 8 mit Tragteller, geschnitten;
- Fig. 06:: Auflageteller, Aufsicht;
- Fig. 07:: Auflageteller, Seitansicht in Einschubrichtung der Kopfklammer, geschnitten;
- Fig. 08:: Auflageteller, Seitansicht rechtwinklig zur Einschubrichtung der Kopfklammer, geschnitten
- Fig. 09:: Kopfklammer, geöffnet, Innenansicht;
- Fig. 10:: Kopfklammer, geöffnet, Seitansicht, geschnitten;
- Fig. 11:: Kopfklammer, geschlossen, Aufsicht, geschnitten;
- Fig. 12:: Kopfklammer, geschlossen, Seitansicht, geschnitten;

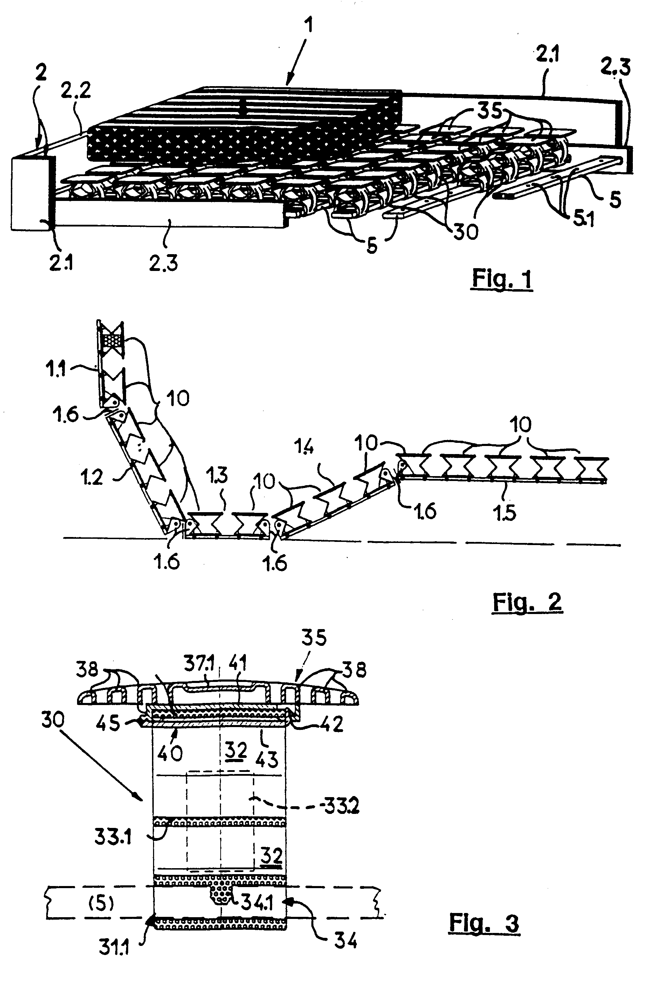

Die Figur 1 zeigt ein vereinfachtes, teilgeschnittenes und abgebrochenes Schema eines Polsterelementes 1. In einem aus den einander gegenüber liegend angeordneten Querholmen 2.2 (durch Abbruch nur einer dargestellt) und Längsholmen 2.1 gebildeten Rahmen 2 ist das Auflager für die Auflage 8 vorgesehen. Dazu sind an die (hier als Seitenwangen einer Bettstelle dargestellten) Längsholme 2.1 mit Lattenaufnahmeleisten 2.3 versehen, in deren langlochähnliche Aufnahmen die Köpfe der Latten 5 in äquidistanten Abständen angeordneten Latten 5. Die Latten 5 sind mit Bohrungen 5.1 versehen, die zur Festlegung der Federelement dienen.

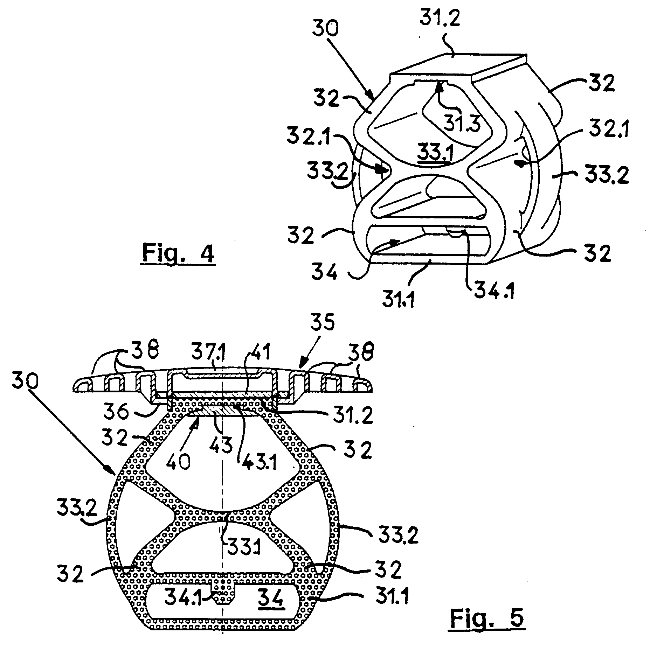

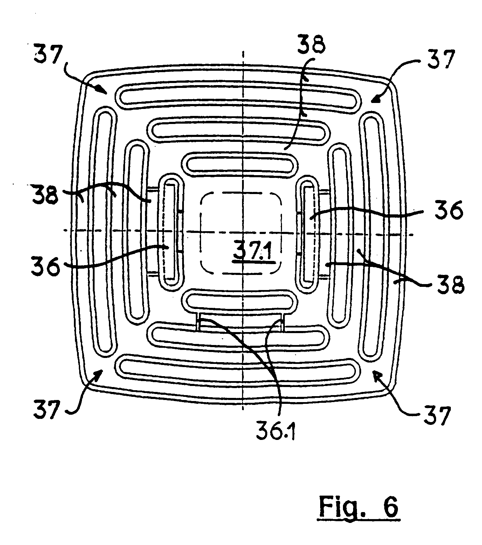

Die eingezeichneten Federelemente 30 (Einzelheiten s. Fig. 3, 4, 5) sind mit Lattenkammern 34 versehen und werden auf diese Latten 5 aufgeschoben. Dadurch erhalten die Federelemente eine Ausrichtung gemäß Lattenausrichtung , die in der Darstellung so gewählt ist, daß alle Federelemente einer Latten 5 gleich ausgerichtet sind, ohne die Erfindung darauf zu beschränken. Die Auflageteller 35, hier rechteckig (Fig. 6) dargestellt, füllen dabei von schmalen Randstreifen und den Zwischenräumen zwischen den einzelnen Auflagetellern 35 abgesehen, die Fläche des Polsterelementes 1 nahezu vollständig aus und nehmen eine Auflage 8 auf, die wegen der Federeigenschaft des mit diesen Federelementen gebildeten Polsterelementes 1 keiner eigenen Federung mehr bedarf, so daß einfache Auflagen, beispielsweise Schaumstoffmatten, vorgesehen sein können. Es versteht sich dabei von selbst, daß auch übliche Matratzen aufgelegt werden können. Um die Federelemente mit im Winkel zueinander verlaufender Ausrichtung einsetzen zu können, werden der Einfachheit halber quadratische Auflageteller benutzt, wie in Figur 4 näher dargestellt.

In der Figur 2 ist ein mehrteiliges Polsterelement stark schematisiert dargestellt, dessen einzelnen Teile, Kopfteil 1.1, Rückenteil 1.2, Beckenteil 1.3, Oberschenkelteil 1.4 und Unterschenkelteil 1.5 gegeneinander verschwenkbar aneinander gelenkt sind. Die Scharniere 1.6 sind dabei so aufgebaut, daß sich die die Auflagefläche bildenden Auflageteller der Federelemente 10 bei einem Verschwenken nicht untergreifen, so daß ein Verklemmen vermieden wird. Dabei ist dabei selbstverständlich, daß hier auch die bekannten motorischen Verstellmöglichkeiten eingesetzt werden können. Die hier dargestellte Anordnung entsteht, wenn die Federelemente 10 auf eine flächige Unterlage aufgesetzt werden; sie kann jedoch auch dann entstehen, wenn die Traglatten der einzelnen aneinander gelenkten Polsterelemente beispielsweise längsverlaufend angeordnet sind. Die in Figur 2 schematisch angedeuteten Federelemente 10 entsprechen den Federelementen mit den Federkörpern 30 der Figuren 3 bis 5.

Wird - wie in den Figuren 6, 7 und 8 näher dargestellt - der Auflageteller 35 mit Rippen versehen, sind diese vorteilhaft als Tragrippen 38 ausgebildet, die in um einen Zentralbereich 36.1 liegenden, verrippten Bereich 37.1 angeordnet sind, die durch rippenfreie Bereiche 37.2 voneinander getrennt sind. Im dargestellten Beispiel verlaufen die Rippen parallel zu den Außenkanten des Auflagetellers 35, so daß die Eckbereiche die rippenfreien Bereiche 37.2 bilden. Durch die Rippenanordnung und die Rippenausbildung (Länge, Breite, Tiefe der U-Form) lassen sie die Auflageteller derart ausilen, daß gewünschte Nachgiebigkeiten bzw. Steifigkeiten erreicht werden, wobei die Nachgiebigkeit durch die verippten und die Steifigkeit durch die nicht-verippten Bereiche bestimmt werden.

Die Figuren 3, 4 und 5 zeigen einen mehrteiligen Federkörper 30 für Federelemente mit im wesentlichen halb-ellipsoidaler Grundform, mit Fuß 31.1 und Kopf 31.2, dessen Seitenwände 32 beidseits einen Einzug 32.1 aufweisen. In der dargestellten Ausführungsform sind diese beiden Einzüge 32.1 über einen inneren Quersteg 33.1 miteinander so verbunden, daß eine Belastung in Richtung der Hauptachse des Ellipsoids eine Zugspannung in diesem Quersteg 33.1 aufbaut, die den Federkörper 30 des Federelements stabilisiert. Dabei weist der Federkörper 30 im Bereich seines Kopfes 31.2 eine nutförmige Ausformung 31.3 auf, zur Befestigung des Tragtellers 35; um das Federelement 30 an Latten 5 zu befestigen, ist bei dieser Ausführungsform eine Lattenkammer 34 vorgesehen, so daß das Federelement über die Latten 5 geschoben werden kann. Dabei ist in der Figur 4 der Federkörper 30 in einer schematischen Perspektive und in den Figuren 3 und 5 das Federelement mit Federkörper 30 und Auflageteller 35 komplett in Seitansicht (Fig. 5) und in Frontansicht (Fig. 3) geschnitten dargestellt, wobei die Federkörper 30 tragende Latte (in Figur 5 gestrichelt angedeutet) nicht in die Lattenkammer 34 eingeschoben ist, wobei sich der Begriff "Seitansicht" auf die offenen Seiten des von dem Hohlprofilabschnittes gebildeten Federkörpers 30, von dem die Federwirkung ausgeht, bezieht. Der Federkörper 30 dieses Federelementes bildet ist in seiner Grundform ein Halbellipsoid, das im Bereich seiner kurzen Halbachse zur Bildung des Fußteils 31.1 abgeschnitten und als Lattenkammer 34 ausgebildet ist, und dessen Spitze als Kopfteil 31.2 flach ausgebildet ist. Vorteilhaft wird die Außenwandung 32 so eingezogen, daß sich der Einzug 32.1 etwa mittig zwischen Fußteil 31.1 und Kopfteil 31.2 befindet. Die Wandstärke der Außenwände des Federkörpers 30 kann über dessen Höhe variieren, zum Abgleich der Federkennlinie und zum Anpassen an gewünschte. Verhältnisse. Die Unterseite des Federkörpers 30 ist mit einer Lattenkammer 34 versehen, die die Aufnahme für die den Federkörper 30 tragende Latte 5 bildet, auf die die Federelemente aufgeschoben werden. Um einen sicheren Sitz der Federelemente auf der Latte 5 zu erreichen, ist in der Lattenkammer 34 ein Fixierungsnoppen 34.1 vorgesehen, der in eine (nicht näher dargestellte) Ausnehmung der Latte 5 eingreift und so den Federkörper 30 und damit das Federelement auf dieser fixiert.

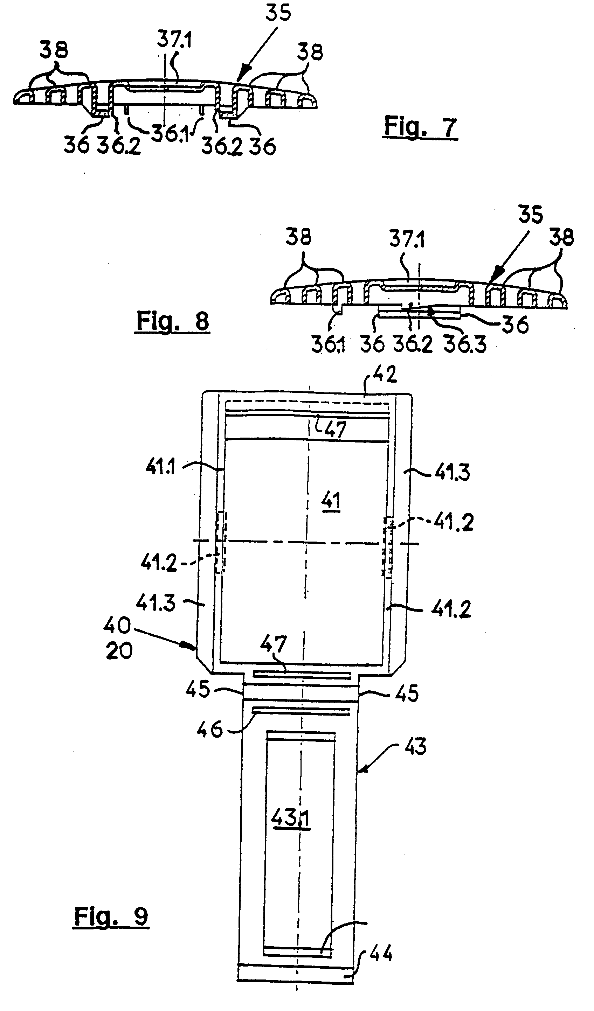

Die Kopfseite 31.2 des Federkörpers 30 wird mit dem in den Figuren 6, 7 und 8 näher dargestellten Auflageteller 35 verbunden. Dazu sind das Kopfteil 31.2, der Auflageteller 35 und die in den Figuren 9 bis 12 näher dargestellte Kopfklammer 40 so ausgebildet, daß Trageplatte 41 und Verschlußlasche 43 der Kopfklammer 40 den Kopfteil 31.2 des Federkörpers 30 umgreifen, wobei die nutartige Vertiefung 31.3 im Kopfteil 31.2 eine Führungsnut für die Verschlußlasche 43 bildet und deren entsprechenden Vorsprung 43.1 aufnimmt. Der Auflageteller 35, dessen Auflagefläche von Rippen 38 durchzogen ist, weist rippenfreie Bereich 37 und einen ebenfalls rippenfreien Zentralbereich 37.1 auf. Die Rippen 38 sind durch Hohlräume voneinander getrennt, so daß hinreichend Freiraum für die Hinterlüftung der Auflage 8 (Fig. 1) gegeben ist, die sich gleichzeitig in diese Hohlräume eindrückt, so daß eine "Verankerung" dieser Auflage an den Auflagetellern 35 eintritt, die einem Verrutschen entgegenwirkt.

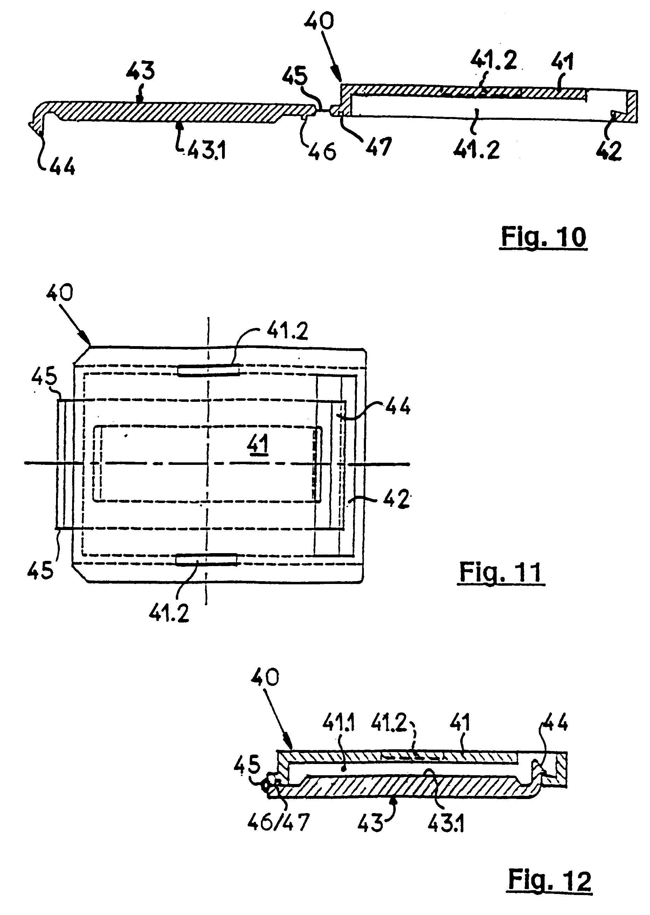

Die Tragplatte 41 der Kopfklammer 40 ruht auf den an der Aüflageteller 35 angeformten Führungswinkeln 36, auf dem die Kopfklammer 40 bei der Montage eingeschoben wird, wobei ein zu weites Einschieben durch Endanschläge 36.1 unterbunden wird. Um das Zurückziehen der Kopfklammer 40 zu verhindern, sind am Auflageteller 35 die in Fig. 9 und 10 näher dargestellte Sperrmittel vorgesehen, die aus einer Sperrnase 36.2 mit Aufgleitschrägen 36.3 bestehen, die mit den Ausnehmungen 41.2 in den korrespondierenden Seitenteilen der Tragplatte 41 der Kopfklammer 40 zusammenwirken. Tragplatte 41 und Verschlußlasche 43, die über ein Folienscharnier miteinander verschwenkbar verbunden sind, werden bei der Montage über Rastwinkel 42 und Rastnasen 44 miteinander verrastet, so daß beide nach der Montage fest miteinander verbunden sind; dabei sorgen in Nuten 47 eingreifende Federn 46 dafür, daß sich beim Verriegeln die Verschlußlasche in ordnungemäßer Position befindet.

Allen diesen Ausführungsformen ist die einfache Form gemeinsam, die ein wirtschaftliches Herstellen ermöglicht. Diese einfache Form ist ein Ausfluß der für den Einsatz vorteilhaften Symmetrie zu der Vertikal-Ebene, die das Federelement mittig in zwei spiegelbildliche Hälften teilt. Durch die Wahl der Material-Konstanten und der Geometrie lassen sich die Federeigenschaften den Bedarfsfällen leicht anpassen, wobei insbesondere durch die Wahl und Ausbildung der ggf. gesondert einzusetzenden Verstärkungen auch die Kennlinien-Progession beeinflußt werden kann. Dabei kann die Form derartig sein, daß die Wandstärke der Seitenwände und der Aufnahmen für Kopf und Fuß am Rand (geringfügig) kleiner ist, als in der Mitte, um bei einem Herstellen in einer Form, etwa beim Formschäumen, ein leichtes Entformen zu gewährleisten. Es ist aber auch möglich, die Wandstärken durchgehend gleich zu halten, was ein Herstellen im Strangpreßverfahren ermöglicht, so daß die Federelemente durch bloßes Ablängen vom Strang abgetrennt und so gewonnen werden. Besonderer Wert wurde auf die einfache Montage gelegt, die durch einfache Rastverbindungen erreicht wurde.

## Patentansprüche

1. Polsterelement (1) insbesondere für Sitz- oder Liegeflächen mit einem Rahmen (2.1, 2.2) mit einer Anzahl äquidistanter Latten (5), jede mit einer Anzahl regelmäßig angeordneter Federelemente, von denen jedes einen zwischen Fußteil (31.1) und Kopfteil (31.2) angeordneten, als Hohlprofilabschnitt mit mindestens einer Kammer ausgebildeten Federkörper (30) aufweist, wobei das Fußteil (31.1) an einer der Latten (5) mit Befestigungsmitteln festgelegt ist, und wobei das Kopfteil (31.2) zum Auflegen einer Polsterung in Form einer Auflage (8) Auflageteller (35) aufweist, die in ihrer Gesamtheit, abgesehen von rand- und eckständigen Federelementen das Polsterelement (1) in Reihen und Spalten annähernd vollständig flächig überdecken, wobei die Achsen der Federkörper (30) in einer zu den Auflagetellern (35) parallelen Ebene und rechtwinklig zur Richtung der belastenden Kraft ausgerichtet sind, und wobei die Federelemente, zumindest die Federkörper (30), als Kunststoffteile ausgebildet sind, **dadurch gekennzeichnet**, daß als Befestigungsmittel des Federelementes an der Latte (5) das Fußteil (31.1) eine Lattenkammer (34) mit im wesentlichen rechteckigem Querschnitt aufweist, wobei jedes der Federelemente auf eine der Latten (5) aufschiebbar ist, und daß der Auflageteller (35) an dem Kopf des Federkörpers (30) mit Klemmaufnahmen (40) festlegbar ist.

2. Polsterelement nach Anspruch 1, **dadurch gekennzeichnet**, daß im Inneren der Lattenkammer (34) auf der dem Federkörper (30) zugewandten Wand eine mit einer der Latten (5) zusammenwirkende Fixierungsnoppe (34.1) vorgesehen ist.

3. Polsterelement nach Anspruch 1 oder 2, **dadurch gekennzeichnet**, daß die Querschnittsform des Federkörpers (30) die eines Halb-Ellipsoids ist, bei dem das Fußteil (31.1) im Bereich der kurzen Achse vorgesehen ist, und dessen von der langen Achse gegebene Spitze zur Bildung des den Auflageteller (35) aufnehmenden Kopfteils (31.2) abgeflacht ist.

4. Polsterelement nach Anspruch 3, **dadurch gekennzeichnet**, daß die Seitenwandungen (32) der Federkörper (30) zwischen Fußteil (31.1) und Kopfteil (31.2) einen Einzug (32.1) aufweisen, so daß dessen Querschnitt die Form einer in der Mitte offenen "Acht" annimmt, wobei vorzugsweise Seitenverbinder (33.2) vorgesehen sind, die die beiden ausladenden Bögen der "Acht" des Federkörpers (30) bildenden Seitenwände (32) auf jeder der beiden Seiten miteinander verbinden, wobei diese mittig angeordnet sind und sich zumindest über einen Teil der Länge der "Acht" des Federkörpers (30) erstrecken.

5. Polsterelement nach einem der Ansprüche 1 bis 4, **dadurch gekennzeichnet**, daß der Federkörper (30) mindestens einen inneren Verstärkungssteg (33.1) aufweist, wobei vorzugsweise der/die Verstärkungssteg/e (33.1) symmetrisch zur Ebene der belastenden Kraft verlaufen.

6. Polsterelement nach einem der Ansprüche 1 bis 5, **dadurch gekennzeichnet**, daß die Achsen benachbarter Federkörper (30) gekreuzt zueinander verlaufen.

7. Polsterelement nach einem der Ansprüche 3 bis 6, **gekennzeichnet durch** eine zur Befestigung der Auflageteller (35) am Kopfteil (31.2) vorgesehene Kopfklammer (40) mit Tragplatte (41), die gelenkig mit einer Verschlußlasche (43) verbunden ist, wobei beide mit Rastmitteln (42, 44) zum Verrasten in geschlossenem Zustand versehen sind.

8. Polsterelement nach Anspruch 7, **dadurch gekennzeichnet**, daß zur gelenkigen Verbindung der Verschlußlasche (43) mit der Tragplatte (41) ein Folienscharnier (45) vorgesehen ist.

9. Polsterelement nach Anspruch 1 bis 8, **dadurch gekennzeichnet**, daß der Auflageteller (35) eine Anzahl von Öffnungen im Bereich der Auflagefläche der Auflage (8) aufweist.

## Claims

1. Cushioning element (1), especially for sitting or lying surfaces, with a frame (2.1, 2.2) having a number of equidistant laths (5), each lath having a number of regularly arranged spring elements, of which each has a spring body (30) located between the foot part (31.1) and the head part (31.2) and taking the form of a hollow profile section with at least one cavity, the foot part (31.1) being fixed by means of fasteners to one of the laths (5) and the head part (31.2) having support plates (35) for the laying on of a cushioning means in the form of a support (8), which support plates, in their totality and apart from edge and corner spring elements, cover almost the entire area of the cushioning element (1) in rows and columns, the axes of the spring bodies (30) being aligned in a plane parallel to the support plates (35) and at right angles to the direction of the force being applied and the spring elements - at least the spring elements (3) - having the configuration of plastic parts, characterised in that, as a means of fastening the spring element to the lath (5), the foot part (31.1) has a lath cavity (34) having an essentially rectangular cross-section, each of the spring elements being adapted to be pushed onto one of the laths (5), and that the support plate (35) can be secured to the head of the spring body (30) by means of clamp supports (40).

2. Cushioning element as claimed in Claim 1, characterised in that inside the lath cavity (34) on the wall facing the spring body (34), a fixing knot (34.1) acting in conjunction with one of the laths (5) is provided.

3. Cushioning element as claimed in Claim 1 or Claim 2, characterised in that the cross-sectional shape of the spring body (30) is semi-elliptical, with the foot part (31.1) being provided in the region of the short axis and its tip, which is formed by the long axis, being flattened to form the head part (31.2) which supports the support plate (35).

4. Cushioning element as claimed in Claim 3, characterised in that the side-walls (32) of the spring bodies (30) have an indent (32.1) between the foot part (31.1) and the head part (31.2), so that the cross-section thereof adopts the shape of a figure "eight" which is open in the centre, with lateral connectors (33.2) preferably being provided, which inter-connect the two side-walls (32) forming the two bulging arcs of the "eight" of the spring body (30) on each of the two sides, the same being centrally located and extending at least beyond part of the length of the "eight" of the spring body (30).

5. Cushioning element as claimed in any one of Claims 1 to 4, characterised in that the spring body (30) has at least one inner reinforcing web (33.1), such reinforcing web(s) (33.1) running symmetrically to the plane of the loading force.

6. Cushioning element as claimed in any one of Claims 1 to 5, characterised in that the axes of adjacent spring bodies (30) run crosswise relative to each other.

7. Cushioning element as claimed in any one of Claims 3 to 6, characterised by a head clamp (40) with a bearing plate (41) provided to fasten the support plates (35) on the head part (31.2), which bearing plate is hinged to a locking plate (43), both being provided with catch means (42, 44) for locking in the closed condition.

8. Cushioning element as claimed in Claim 7, characterised in that a foil hinge (45) is provided for forming the hinged connection of the locking plate (43) with the bearing plate (41).

9. Cushioning element as claimed in Claims 1 to 8, characterised in that the support plate (35) has a number of openings in the region of the supporting surface of the support (8).

## Revendications

1. Elément de rembourrage (1) notamment pour des surfaces de sièges ou de couchettes, comportant un cadre (2.1, 2.2) pourvu d'une multiplicité de lattes équidistantes (5), dont chacune comporte une multiplicité d'éléments de ressort disposés de manière réglable, chacun de ces éléments comprenant un corps de ressort (3) disposé entre une partie formant pied (31.1) et une partie formant tête (31.2) et agencé sous la forme d'une section en forme de profilé creux comportant au moins une chambre, dans lequel la partie formant pied (31.1) est fixée à l'une des lattes (5) à l'aide de moyens de fixation et dans lequel la partie formant tête (31.2) possède, pour l'application d'un rembourrage sous la forme d'un appui (8), des coupelles d'appui (35), qui recouvrent presque sur toute sa surface, selon des rangées et des colonnes, l'élément de rembourrage (1) dans sa totalité, indépendamment d'éléments de ressorts situés au niveau de bords et de coins, et dans lequel les axes des corps de ressorts (30) sont dirigés dans un plan parallèle aux coupelles d'appui (35) et perpendiculairement à l'action de la force de charge, et dans lequel les éléments de ressorts, au moins les corps de ressorts (30), sont agencés sous la forme de pièces en matière plastique, caractérisé en ce qu'en tant que moyens de fixation de l'élément de ressort à la latte (5), la partie formant pied (31.1) possède une chambre (34) possédant une section transversale essentiellement rectangulaire, chacun des éléments de ressorts pouvant être emmanché sur l'une des lattes (5), et en ce que la coupelle d'appui (35) peut être fixée sur la tête du corps de ressort (30) à l'aide de logements de serrage (40).

2. Elément de rembourrage selon la revendication 1, caractérisé en ce qu'à l'intérieur de la chambre (34) des lattes est prévu, sur la paroi tournée vers le corps de ressort (3), un bouton de fixation (34.1) qui coopère avec une des lattes (5).

3. Elément de rembourrage selon la revendication 1 ou 2, caractérisé en ce que la forme en coupe transversale du corps de ressort (30) est celle d'un demi-ellipsoïde, dans lequel la partie formant pied (31.1) est prévue dans la zone du petit axe et dont la pointe, qui est définie par le grand axe, est aplatie pour former la partie de tête (31.2) qui reçoit la coupelle d'appui (35).

4. Elément de rembourrage selon la revendication 3, caractérisé en ce que les parois latérales (32) des corps de ressorts (30) possèdent, entre la partie formant pied (31.1) et la partie formant tête (31.2), une zone rentrante (32.1) de sorte que sa section transversale possède la forme d'un "huit" ouvert au centre, tandis qu'il est prévu de préférence des éléments de liaison latéraux (33.2), qui relient entre elles les deux parois latérales (32) formant les deux arcs en porte-à-faux du "huit" du corps de ressort (30), sur chacun des deux côtés, ces éléments de liaison étant disposés en position centrée et s'étendant au moins sur une partie de la longueur du "huit" du corps de ressort (30).

5. Elément de rembourrage selon l'une des revendications 1 à 4, caractérisé en ce que le corps de ressort (30) comporte au moins une barrette de renfort intérieure (33.1), de préférence la ou les barrettes de renfort (33.1) s'étendant symétriquement par rapport au plan de la force de charge.

6. Elément de rembourrage selon l'une des revendications 1 à 5, caractérisé en ce que les axes de corps de ressorts voisins (30) se croisent.

7. Elément de remboursement selon les revendications 3 à 6, caractérisé par une pince de tête (40), qui est prévue pour la fixation de la coupelle d'appui (35) sur la partie formant tête (31.2) et comporte une plaque de support (41), qui est reliée d'une manière articulée à une patte de fermeture (43), ces deux éléments étant pourvus de moyens d'encliquetage (42, 44) destinés à s'encliqueter à l'état fermé.

8. Elément de rembourrage selon la revendication 7, caractérisé en ce qu'une charnière en forme de feuille (41) est prévue pour la liaison articulée de la patte de fermeture (43) avec la plaque de support (41).

9. Elément de rembourrage selon les revendications 1 à 8, caractérisé en ce que la coupelle d'appui (35) possède un certain nombre d'ouvertures dans la zone de la surface d'appui de l'appui (8).
